# EUROPÄISCHE PATENTSCHRIFT

(11) **EP 2 433 169 B1**
(45) Veröffentlichungstag und Bekanntmachung des Hinweises auf die Patenterteilung: **18.09.2013**
(21) Anmeldenummer: 10794977.8
(22) Anmeldetag: 15.12.2010
(51) Int. Cl.: G02B 7/00, G02B 7/02, G02B 13/00

(54) **OPTISCHER SCHICHTSTAPEL UND VERFAHREN ZU DESSEN HERSTELLUNG**
OPTICAL LAMINATION AND METHOD FOR THE PRODUCTION THEREOF
EMPILEMENT OPTIQUE DE COUCHES ET SON PROCÉDÉ DE FABRICATION

(30) Priorität: 21.12.2009 DE 102009055083
(43) Veröffentlichungstag der Anmeldung: 28.03.2012
(60) Teilanmeldung: 13176558.8
(73) Patentinhaber: Fraunhofer Gesellschaft zur Förderung der angewandten Forschung E.V., 80686 München (DE)
(72) Erfinder: WIPPERMANN, Frank, 98617 Meiningen (DE); DUPARRÉ, Jacques, 07745 Jena (DE); DANNBERG, Peter, 07745 Jena (DE); BRÄUER, Andreas, 07646 Schlöben (DE)
(74) Vertreter: Schenk, Markus
(86) Internationale Anmeldenummer: PCT/EP2010/069779
(87) Internationale Veröffentlichungsnummer: WO 2011/076634

(56) Entgegenhaltungen:
- EP-A2- 1 796 168
- JP-A- 2004 133 073
- US-A1- 2002 071 190
- US-A1- 2005 030 647

## Beschreibung

Die vorliegende Erfindung betrifft einen optischen Schichtstapel, wie er beispielsweise für opto-elektronische Systeme verwendet werden kann, und insbesondere die mechanische Beabstandung einzelner Schichten des optischen Schichtstapels.

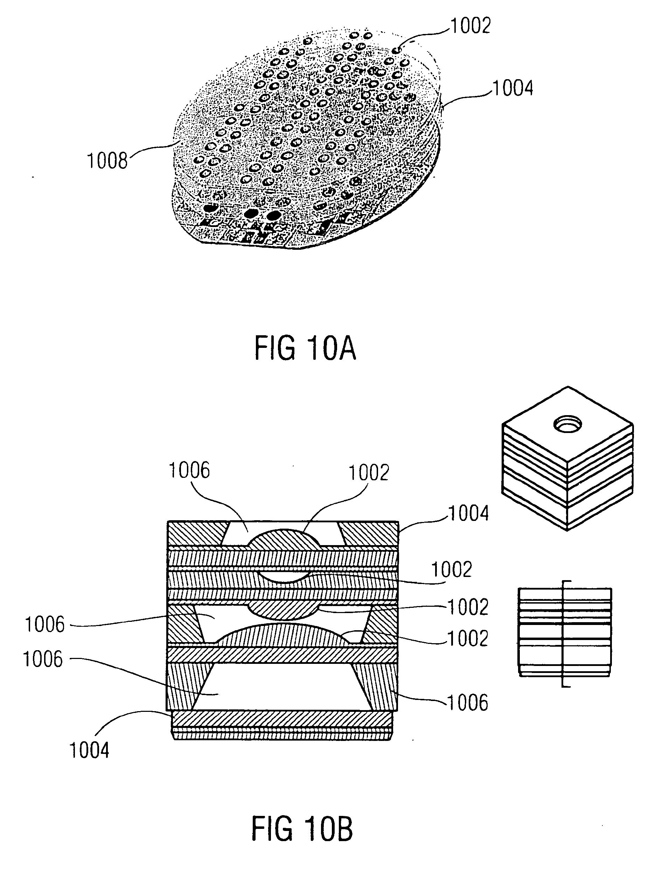

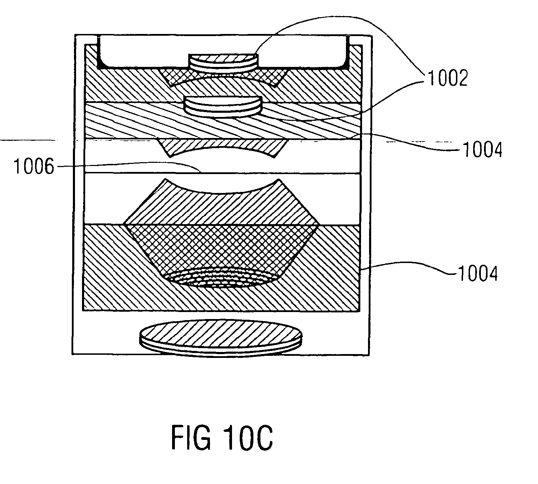

Opto-elektronische Systeme bzw. Schichtstapel, wie sie schematisch in den Fig. 10a bis 10c dargestellt sind, werden beispielsweise in digitalen Kameras, drahtlosen Geräten mit Fotografiefunktionalität und vielen anderen Anwendungen eingesetzt. Bei der Herstellung opto-elektronischer Systeme, wie z. B. Mikroobjektiven für Mobiltelefone, müssen enge Herstellungs- und Justagetoleranzen im Bereich weniger Mikrometer (µm) eingehalten werden. Bei einer Fertigung derartiger opto-elektronischer Systeme im Nutzen, d. h. auf Wafer-Level, bedeutet dies, dass einzelne Lagen bzw. Schichten des opto-elektronischen Systems (z. B. Wafer mit Linsen 1002, Spacer-Wafer 1004 zur Realisierung von Lufträumen bzw. optisch genutzter Bereiche 1006) mit hoher mechanischer Präzision zu fertigen sind, da Fertigungstoleranzen Einfluss auf die optischen Eigenschaften des opto-elektronischen Systems besitzen. Dies führt mithin zu hohen Herstellungskosten bzw. geringen Prozessausbeuten.

Erforderliche Lagen bzw. Schichten aus Linsen- und sog. Spacer-Wafern werden nach unterschiedlichsten Verfahren einzeln gefertigt. Linsen 1002 bestehen vorzugsweise aus UV-härtendem Polymer und sind auf einem Glassubstrat angeordnet. Mehrere dieser Glassubstrate 1008 werden dann übereinander gestapelt und vorzugsweise mittels UVhärtendem Kleber gefügt. Erforderliche Lufträume 1006 zwischen den Linsen 1002 werden durch Spacer-Wafer 1004, die Abstandslagen mit Durchgangslöchern darstellen, generiert.

Aus einer Funktion des optischen Schichtstapels resultierende enge axiale Positionstoleranzen der Linsenflächen müssen dabei von mechanischen Dickentoleranzen der einzelnen Lagen, sowie den Dickentoleranzen der Klebstoffschichten eingehalten werden. Es resultieren damit hohe Anforderungen an die Maßhaltigkeit mechanischer Komponenten, die für die optische Funktion des optischen bzw. opto-mechanischen Schichtstapels nur mittelbar zur Einstellung des Abstandes optischer Komponenten 1002, wie z. B. Linsen, beteiligt sind. Als Abstandslagen 1004 (Spacer-Wafer) kommen hierbei vorzugsweise Glasmaterialien zum Einsatz, da diese eine Forderung nach hoher Temperaturbeständigkeit erfüllen. In einer monolithischen Ausführungsweise, d. h., keine Verwendung von Glaswafern, werden temperaturbeständige Polymere genutzt. In beiden Fällen sind die zur Beabstandung der optisch wirksamen Flächen genutzten Strukturen transparent, was für die optische Funktion in Folge von Eindringen von Falschlicht nachteilig sein kann.

Die unterschiedlichen Materialien für Schichten mit optisch wirksamen Elementen, Abstandshalterschichten und Fügeschichten sind nachteilig in Bezug auf Klima- und Langzeitverhalten des resultierenden opto-elektronischen Systems bzw. des darin verwendeten optischen oder opto-mechanischen Schichtstapels. Beispielsweise besitzen Polymere für die Herstellung optischer bzw. mikrooptischer Komponenten durch UV-Replikation einen großen thermo-optischen Koeffizienten, d. h., die Brechzahl des Materials verändert sich stark bei sich ändernder Temperatur, wobei im Allgemeinen mit zunehmender Temperatur die Brechzahl fällt. Die thermo-optischen Koeffizienten derartiger Materialien sind dabei etwa 10- bis 100-mal größer als die von Glasmaterialien, die ansonsten Anwendung in der Optik finden. Folglich kann sich die Brechkraft einer Linse aus UV-Polymermaterialien bei Temperaturänderung erheblich reduzieren, was im Falle abbildender Optiken zu einer Vergrößerung der bildseitigen Schnittweite führt. Bei Beibehaltung des Abstands zwischen Linse und Bild resultiert eine Defokussierung und mithin eine Verschlechterung der Abbildungsqualität.

In Folge der Zunahme der Brennweite mit steigender Temperatur, hervorgerufen durch thermische Ausdehnung des Linsenmaterials sowie der Abhängigkeit der Brechzahl von der Temperatur, resultiert eine Zunahme der Schnittweite zwischen letzter Linse und Bildposition. Da in Folge der thermischen Ausdehnung der Abstandslagen auch dieser Abstand vergrößert wird, kann prinzipiell eine Kompensation thermischer Defokussierung (Athermisierung) erreicht werden. Für Linsenmaterialien mit kleinen thermo-optischen Koeffizienten, wie z. B. Gläser, ist dies mit Spacer-Materialien mit angepassten thermischen Ausdehnungskoeffizienten möglich. Dagegen sind zur Athermisierung von Objektiven mit Kunststofflinsen Materialien mit Ausdehnungskoeffizienten von einigen 100 x 10⁻⁶ 1/K erforderlich, die jedoch in der Technik nicht bekannt sind.

Die US 2005/0030647 A1 zeigt eine Linseneinheit mit einer Mehrzahl von übereinandergestapelten Linsen.

Die EP 1 796 168 A2 zeigt ein optisches Modul sowie Verfahren zur Montage eines optischen Moduls.

Demnach besteht die Aufgabe der vorliegenden Erfindung darin, ein Konzept für optische Schichtstapel bereitzustellen, mit welchem die oben geschilderten Probleme behoben werden können.

Diese Aufgabe wird durch einen optischen Schichtstapel mit den Merkmalen des Patentanspruchs 1 sowie durch ein Verfahren gemäß Patentanspruch 12 gelöst.

Die vorliegende Erfindung basiert auf der Erkenntnis, dass eine axiale Position, d. h. eine Position in vertikaler bzw. Stapelrichtung, optischer Komponenten in einem optischen Schichtstapel nicht unmittelbar von Dicken der Abstandslagen vorgegeben wird, sondern eine zur Realisierung eines erforderlichen Abstands genutzte Struktur aus zwei Teilen besteht, die nach dem Nut- und Federprinzip ausgeformt sind.

Ausführungsbeispiele der vorliegenden Erfindung schaffen dazu einen optischen Schichtstapel mit einer ersten Schicht, einer zweiten Schicht, einem der ersten Schicht zugeordneten ersten Abstandshalterteil und einem der zweiten Schicht zugeordneten zweiten Abstandshalterteil, wobei die zwei Abstandshalterteile Nut und Feder für ein Ineinandergreifen in einer Stapelrichtung des optischen Schichtstapels aufweisen, um eine Verbindung zwischen dem ersten und dem zweiten Abstandshalterteil und eine Beabstandung der ersten und der zweiten Schicht in Stapelrichtung zu erhalten.

Die Feder des ersten (zweiten) Abstandshalterteils ragt dabei in die Nut des zweiten (ersten) Abstandshalterteils. Nut und Feder sind vorteilhafterweise so ausgelegt, dass sie einen optisch genutzten Bereich, wie beispielsweise eine Apertur, zwischen der ersten und der zweiten Schicht in einer geschlossenen Kontur umlaufen. Die Feder besitzt eine geringere Breite als die Nut, so dass eine laterale Verschiebung der zu fügenden Schichten bzw. Komponenten möglich ist. Zur Verbindung der Komponenten wird die Nut mit einem Adhäsiv, also einem Verbindungsmaterial, wie z.B. einem Klebstoff, gefüllt und hiernach der zweite Fügepartner mit seiner Feder in die Nut gesetzt. Nut und Feder sind dabei in ihrer Tiefe, respektive Länge, derart dimensioniert, dass sich ein ausreichender, mit dem Adhäsiv gefüllter Überlappungsbereich in axialer bzw. Stapelrichtung ergibt.

Gemäß einem Ausführungsbeispiel ist das Adhäsiv ein dauerelastisches Material, welches einen größeren thermischen Ausdehnungskoeffizienten als das umgebende Nut- und/oder Federmaterial aufweist. Dadurch kann sich bei einer Temperaturerhöhung das dauerelastische Adhäsiv stärker ausdehnen und wird durch die Nutgeometrie in seiner lateralen Ausdehnung behindert. Die Ausdehnung des Adhäsivs folgt damit hauptsächlich in axialer, d. h. Stapelrichtung, in der die Nut nach oben (oder nach unten) nicht begrenzt ist. In Folge der Elastizität des Adhäsivs werden keine wesentlichen Druckspannungen aufgebaut und die thermische Volumenänderung wird im Wesentlichen in eine Längeänderung überführt. Der Effekt der Wegübersetzung ist umso größer, je größer der Unterschied zwischen den thermischen Ausdehnungskoeffizienten von dauerelastischem Adhäsiv und Nut- und/oder Federmaterial ist. Das dauerelastische Adhäsiv erfüllt somit zwei Aufgaben: Verbindung der Fügepartner, d. h. erstem und zweitem Abstandshalterteil, sowie Anpassung der Längenänderung an dem geformten Wert in µm/Kelvin. Wenn beispielsweise die erste Schicht eine abbildende Optik trägt oder bildet, wie z.B. zusammen mit weiteren auf der der zweiten Schicht gegenüberliegenden Seite befindlichen Schichten, kann ein thermischer Ausdehnungskoeffizient eines Adhäsivs der Adhäsionsverbindung und eine Form der Nut und der Feder so ausgewählt sein, dass über einen Temperaturbereich von -40° bis 80°C hinweg ein Abstand einer Bildebene der abbildenden Optik in Richtung einer optischen Achse der abbildenden Optik zur zweiten Schicht um weniger als ±1% einer Objektivbrennweite der abbildenden Optik bei 20°C von einer Lage der Bildebene bei 20°C abweicht, oder dass eine Spannweite einer Verteilung von über einen Temperaturbereich von -40° bis 80°C hinweg vorkommenden Abständen einer Bildebene der abbildenden Optik in Richtung einer optischen Achse der abbildenden Optik zur zweiten Schicht weniger als 2% einer Objektivbrennweite der abbildenden Optik bei 20°C beträgt, wobei in dieser Bildebene, d.h. der Ebene bester Auflösung, beispielsweise der photoempfindliche Bereich eines Bildsensors angeordnet ist, so dass die Abbildungsschärfe über diesen Temperaturbereich erhalten bleibt. Wenn aber die erste Schicht eine erste abbildende Optik und die zweite Schicht eine zweite abbildende Optik trägt oder bildet, wie z.B. jeweils zusammen mit anderen Schichten zur jeweils anderen Seite hin, dann kann ein thermischer Ausdehnungskoeffizient eines Adhäsivs der Adhäsionsverbindung und eine Form der Nut und der Feder so ausgewählt sein, dass über einen Temperaturbereich von -40° bis 80°C hinweg ein Abstand einer Bildebene der ersten abbildenden Optik in Richtung einer gemeinsamen optischen Achse der ersten und zweiten abbildenden Optik zu einer Objektebene der zweiten abbildenden Optik um weniger als ±1% der größeren der Objektivbrennweiten der ersten und zweiten abbildenden Optik bei 20°C von Null abweicht, oder dass eine Spannweite einer Verteilung von über einen Temperaturbereich von -40° bis 80°C hinweg vorkommenden Abständen einer Bildebene der ersten abbildenden Optik in Richtung einer gemeinsamen optischen Achse der ersten und zweiten abbildenden Optik zu einer Objektebene der zweiten abbildenden Optik weniger als 2% einer größeren der Objektivbrennweiten der beiden abbildenden Optiken bei 20°C beträgt.

Ausführungsbeispiele der vorliegenden Erfindung ermöglichen also zum einen ein Gehäusekonzept zur Herstellung opto-elektronisch-mechanischer Systeme im Nutzen, welches Komponenten- und Justagetoleranzen mechanischer Komponenten (Abstandshalter) von denen optisch wirksamer Komponenten (Linsenkomponenten) entkoppelt. Dadurch ergibt sich ein zweiseitiger Kostenvorteil: Zum einen sinken die Kosten bei der Herstellung zusätzlich benötigter Abstandslagen. Zum anderen erhöht sich die Ausbeute der im Nutzen, d. h. auf Wafer-Level gefertigter Systeme. Die Abstandshalterschichten bzw. -strukturen können weiterhin in einem preiswerten und lichtundurchlässigen Polymer gefertigt werden und eliminieren herkömmlich erforderliche zusätzliche Komponenten und Herstellungsschritte zur Vermeidung von Falschlicht.

Des Weiteren kann in einfacher und preiswerter Weise eine Kompensation thermisch induzierter Änderungen der Brechkraft optischer Aufbauten, wie z. B. bei Kameraobjektiven, ermöglicht werden. Die Kompensation des thermischen Einflusses geschieht passiv ohne Nutzung von zusätzlichen Energiequellen oder aktorischer Elemente.

Vorteilhafte-Weiterbildungen der vorliegenden Erfindung sind Gegenstand der abhängigen Ansprüche.

Bevorzugte Ausführungsbeispiele der vorliegenden Erfindung werden nachfolgend bezugnehmend auf die beiliegenden Figuren näher erläutert. Es zeigen:
- Fig. 1: eine schematische Seitenansicht eines optischen Schichtstapels;
- Fig. 2a-c: Seitenansichten eines optischen Schichtstapels gemäß einem Ausführungsbeispiel der vorliegenden Erfindung:
- Fig. 3a,b: Draufsichten auf ein erstes und zweites Abstandshalterteil mit Feder und Nut gemäß einem Ausführungsbeispiel der vorliegenden Erfindung;
- Fig. 4: Seitenansichten von Abstandshalterteilen mit Nut und Feder wobei die rechts dargestellte Konfiguration gemäß einen Ausführungsbeispiel der vorliegenden Erfindung ist;
- Fig. 5a-e: Seitenansichten von optischen Schichtstapeln gemäß noch weiteren Ausführungsbeispielen der vorliegenden Erfindung;
- Fig. 6: eine axiale Positionierung eines optischen Schichtstapels durch Einbringung hochpräziser Körper gemäß einem Ausführungsbeispiel;
- Fig. 7: eine Mehrzahl übereinander gestapelter optischer Flächen gemäß Ausführungsbeispielen der vorliegenden Erfindung;
- Fig. 8: eine schematische Darstellung von im Nutzen gefertigter optischer Schichtstapel gemäß verschiedenen Ausführungsbeispielen der vorliegenden Erfindung;
- Fig. 9: eine schematische Darstellung einer Mehrzahl von optischen Schichtstapeln mit unterschiedlichen optischen Funktionsflächen: und
- Fig. 10a-c: optische Schichtstapel gemäß dem Stand der Technik.

In der nachfolgenden Beschreibung können bei den unterschiedlichen Ausführungsbeispielen der vorliegenden Erfindung gleiche oder gleich wirkende Funktionselemente gleiche Bezugszeichen aufweisen. Somit ist die Beschreibung dieser Funktionselemente in den verschiedenen, im nachfolgenden dargestellten, Ausführungsbeispielen untereinander austauschbar.

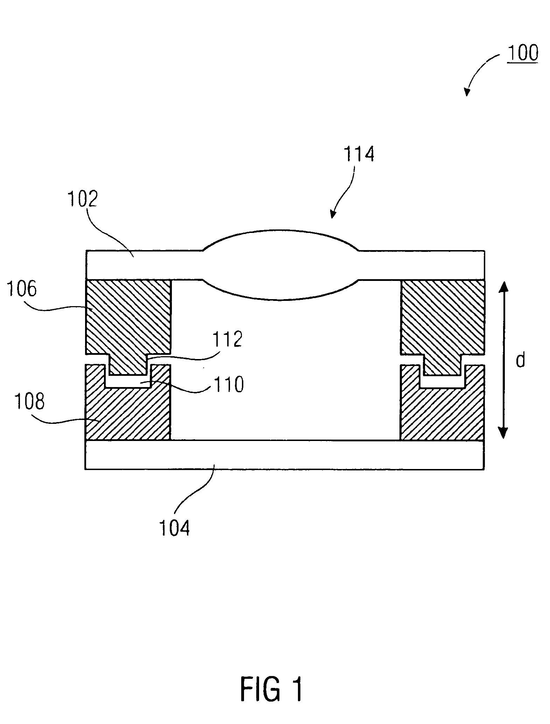

Fig. 1 zeigt schematisch eine Seitenansicht eines optischen bzw. opto-mechanischen Schichtstapels 100.

Der optische Schichtstapel 100 weist eine erste Schicht 102 und eine zweite Schicht 104 auf. Der ersten Schicht 102 ist ein erstes Abstandshalterteil 106 zugeordnet. Der zweiten Schicht 104 ist ein zweites Abstandshalterteil 108 zugeordnet. Die beiden Abstandshalterteile 106. 108 weisen Nut 110 und Feder 112 für ein Ineinandergreifen in einer Stapelrichtung des optischen Schichtstapels 100 auf, um eine Verbindung zwischen dem ersten Abstandshalterteil 106 und dem zweiten Abstandshalterteil 108 und eine Beabstandung der ersten Schicht 102 und der zweiten Schicht 104 in Stapelrichtung zu erhalten.

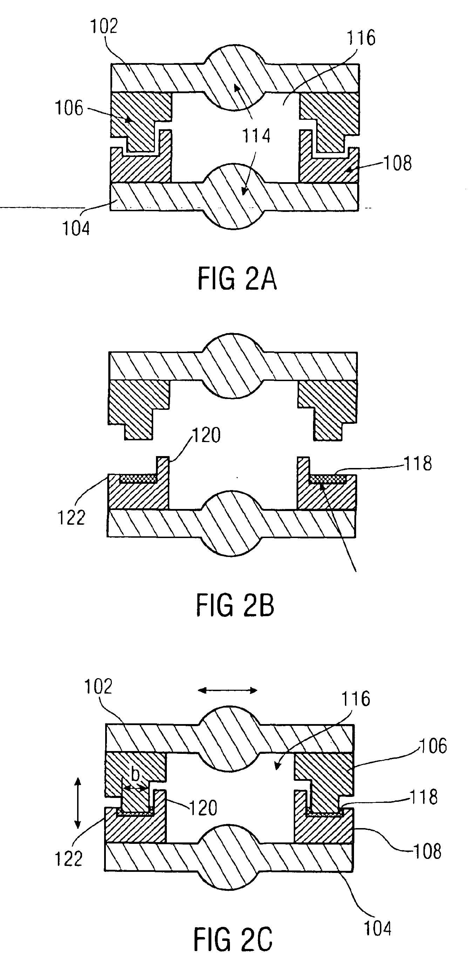

Obwohl in Fig. 1 das erste Abstandshalterteil 106 die Feder 112 und das zweite Abstandshalterteil 108 die Nut 110 aufweist, kann es sich auch umgekehrt verhalten, d. h.. die Feder 112 könnte dem zweiten Abstandshalterteil 108 und die Nut 110 könnte dem ersten Abstandshalterteil 106 zugeordnet sein. Gemäß Beispielen weist wenigstens eine der beiden Schichten 102, 104 eine optische Komponente 114 auf. In dem in Fig. 1 gezeigten Beispiel ist die optische Komponente 114, die beispielsweise aus der Gruppe von Linsen, Prismen, defraktiven Strukturen, holographischer Strukturen oder optischen Filtern stammen kann, der ersten Schicht 102 zugeordnet. Hier handelt es sich bei der ersten Schicht 102 also beispielsweise um einen Wafer mit Linsen. Die zweite Schicht 104 kann beispielsweise eine Substratschicht mit einem der optischen Komponente 114 zugeordneten opto-elektronischen Bildsensor (z. B. CCD- oder CMOS-Bildsensoren) sein. Genauso kann es sich bei der zweiten Schicht 104 aber auch um eine weitere Schicht mit optischen Komponenten 114, wie z. B. Linsen, handeln, so wie es schematisch in den Fig. 2a bis 2c gezeigt ist.

Wie es im Folgenden noch näher beschrieben wird, kann ein thermischer Ausdehnungskoeffizient eines in der Nut 110 befindlichen Adhäsivs und eine Form der Nut 110 und der Feder 112 so ausgewählt sein, dass über einen Temperaturbereich von -40° bis 80°C hinweg ein Abstand einer Bildebene der abbildenden Optik 114, wie z.B. für eine im Unendlichen liegende oder anderswo im festen Abstand zur Optik 114 liegende Objektebene, in Normalen- bzw. Schichtdickenrichtung, d.h. der Richtung einer optischen Achse der abbildenden Optik 114, zur Schicht 104, wo beispielsweise der photoempfindliche Bereich vorerwähnten Bildsensors angeordnet ist, um weniger als ±1% der Objektivbrennweite der abbildenden Optik 114 bei 20°C von der Lage der Bildebene bei 20°C abweicht. Wenn aber sowohl die Schicht 102 als auch die zweite Schicht 104 jeweils eine abbildende Optik trägt oder bildet, wobei nur die eine 114 in Fig 1 gezeigt ist, dann kann ein thermischer Ausdehnungskoeffizient dieses Adhäsivs der Adhäsionsverbindung zwischen Nut 110 und Feder 112 und eine Form der Nut 110 und der Feder 112 so ausgewählt sein, dass über einen Temperaturbereich von -40° bis 80°C hinweg ein Abstand einer Bildebene der ersten abbildenden Optik, wie z.B. 114, zu einer Objektebene der zweiten abbildenden Optik, wie z.B. diejenige in der Schicht 104, in Nonnalenrichtung um weniger als ±1% der größeren der Objektivbrennweiten der beiden abbildenden Optiken von Null, also dem perfekt übereinanderliegenden Zustand, abweicht, so dass dieselben über diesen Temperaturbereich hinweg eine sehr genau definierte Zwischenabbildung aufweisen, und zwar für eine vorbestimmte Objektebene der Optik 114 und eine vorbestimmte Bildebene der Optik in der Schicht 104. Es sei dabei darauf hingewiesen, dass die vorgenannten abbildenden Optiken in der Schicht 102 bzw. 104 nicht notwendiger Weise allein durch die bzw. in oder an der jeweiligen Schicht gebildet werden, sondern dass die abbildende Optik zusammen mit weiteren Schichten des Schichtstapels gebildet sein kann, die auf der den betrachteten zwei Schichten 102 und 104 abgewandten Seite angeordnet sein können, wenn der Schichtstapel weitere Schichten aufweist, wofür im folgenden auch noch Ausführungsbeispiel angeführt werden.

Bei dem anhand der Fig. 2a bis 2c gezeigten Ausführungsbeispielen handelt es sich bei der ersten und zweiten Schicht 102, 104 und/oder den darin gebildeten optischen Komponenten 114 um ein UV-härtendes substratfreies Polymer, wie z. B. ein Epoxid. Sowohl das erste als auch das zweite Abstandshalterteil 106, 108 kann jeweils aus einem anderen Material bestehen als die Schichten 102, 104 oder als die optischen Komponenten 114. Vorzugsweise bestehen das erste und/oder das zweite Abstandshalterteil 106, 108 jedoch ebenfalls aus einem Polymer und werden in einem preiswerten Verfahren, wie z. B. Gießen, Spritzgießen. Heißprägen, Spritzprägen oder Resin Transfer Molding (RTM) gefertigt. Als Polymer für die Abstandshalter 106, 108 können Epoxide genutzt werden, die hohen Temperaturen wiederstehen und deren optische Transmission (durchlässig bis undurchlässig) beeinflusst werden kann. Gemäß Ausführungsbeispielen sind die Abstandshalter 106, 108 jeweils mit den Schichten 102, 104 verbunden. Dabei handelt es sich beispielsweise um eine einstückige oder eine stoffschlüssige Verbindung, wie sie beispielsweise durch Kleben entsteht. Stoffschlüssige Verbindungen werden im Allgemeinen diejenigen Verbindungen genannt, bei denen die Verbindungspartner durch atomare oder molekulare Kräfte zusammengehalten werden.

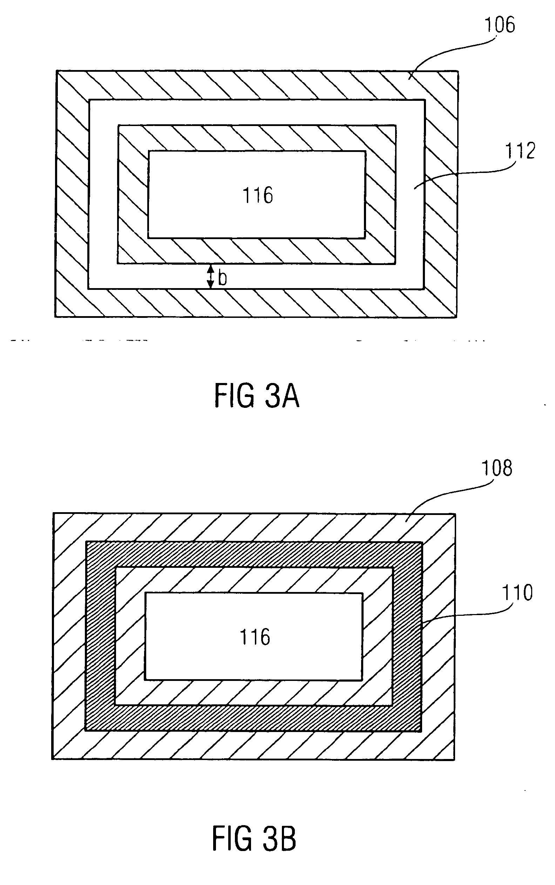

Durch einen Bereich zwischen der ersten Schicht 102 und der-zweiten Schicht 104 bzw. durch einen Bereich zwischen den optischen Komponenten 114, wird ein optisch genutzter Bereich 116 definiert, wie z. B. ein Hohlraum bzw. eine Apertur. Nut 110 und Feder 112 der beiden Abstandshalterteile 106, 108 sind gemäß Ausführungsbeispielen derart ausgebildet, dass sie den optisch genutzten Bereich 116 in einer geschlossenen Kontur umlaufen, so wie es beispielhaft in einer Draufsichtdarstellung gemäß den Fig. 3a, 3b gezeigt ist. Obwohl dort eine grundsätzlich rechteckige Kontur der beiden Abstandshalterteile 106. 108 dargestellt ist, sind natürlich auch andere geschlossene Konturen der Abstandshalter 106, 108 sowie der zugeordneten Nut 110 und Feder 112 möglich, wie beispielsweise kreisförmige Konturen, Konturen mit abgerundeten Ecken oder Ovale.

Die Feder 112 weist eine derart geringe Breite b verglichen mit der Nut 110, auf, so dass eine laterale Verschiebung (siehe horizontaler bzw. lateraler Doppelpfeil in Fig. 2b) der zu fügenden Abstandshalterteile 106, 108 möglich ist, wenn die Feder 112 in die Nut 110 greift. Zur Verbindung der Abstandshalterteile 106, 108 wird ein Adhäsiv 118 in die Nut 110 gegeben und anschließend der zweite Fügepartner 106 mit seiner Feder 112 in die Nut 110 gesetzt. Dadurch werden das erste und das zweite Abstandshalterteil 106, 108 durch eine Adhäsionsverbindung zwischen Nut 110 und Feder 112 miteinander verbunden. Nut 110 und Feder 112 sind dabei in ihrer Tiefe bzw. Länge derart dimensioniert, dass sich ein ausreichender, mit dem Adhäsiv 118 gefüllter Überlappungsbereich in axialer Richtung bzw. Stapelrichtung (siehe vertikaler Doppelpfeil links in Fig. 2b) ergibt. Gemäß einem bevorzugten Ausführungsbeispiel der vorliegenden Erfindung handelt es sich bei dem Adhäsiv 118 um ein dauerelastisches Material, insbesondere ein dauerelastisches Polymer, welches einen größeren thermischen Ausdehnungskoeffizienten als das umgehende Material der Nut 110 bzw. das umgebende Abstandshaltermaterial aufweist. Der Ausdehnungskoeffizient oder Wärmeausdehnungskoeffizient ist ein Kennwert, der das Verhalten eines Stoffes bezüglich Veränderungen seiner Abmessungen bei Temperaturveränderungen beschreibt - deswegen oft auch thermischer Ausdehnungskoeffizient genannt. Der hierfür verantwortliche Effekt ist die Wärmeausdehnung. Da die Wärmeausdehnung bei vielen Stoffen nicht gleichmäßig über alle Temperaturbereiche erfolgt, ist auch der Wärmeausdehnungskoeffizient selbst temperaturabhängig und wird deshalb für eine Bezugstemperatur oder einen Temperaturbereich angegeben. Es wird zwischen dem thermischen Längenausdehnungskoeffizienten α (auch linearer Wärmeausdehnungskoeffizient oder Wärmedehnung) und dem thermischen Raumausdehnungskoeffizienten y (auch räumlicher Ausdehnungskoeffizient oder Volumenausdehnungskoeffizient oder kubischer Ausdehnungskoeffizient) unterschieden.

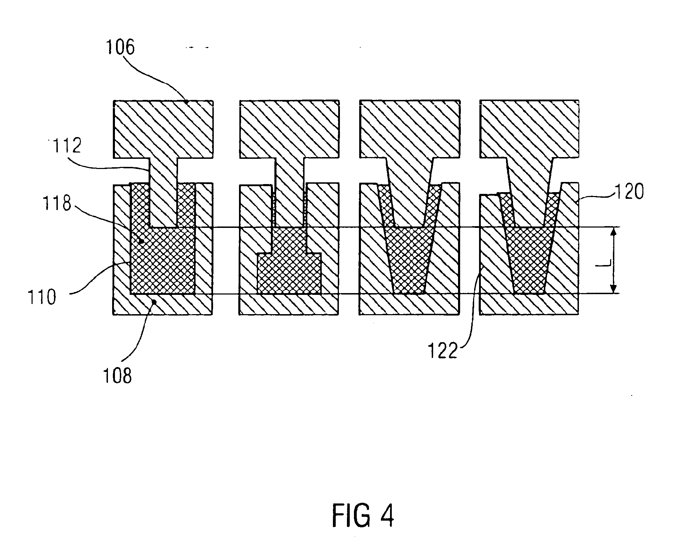

Bei einer Temperaturerhöhung dehnt sich mithin das dauerelastische Adhäsiv 118 stärker aus und wird durch die Nutgeometrie in seiner lateralen, (d. h.; senkrecht zur Stapelrichtung) Ausdehnung gehindert. Die Ausdehnung des Adhäsivs 118 erfolgt damit hauptsächlich in axialer (d. h. vertikal bzw. Stapelrichtung) Richtung, in der die Nut 110 nach oben nicht begrenzt ist. In Folge der Elastizität des Adhäsivs l18 werden keine wesentlichen Druckspannungen aufgebaut und thermische Volumenänderungen werden im Wesentlichen in eine Änderung AL der Länge bzw. Höhe des in der Nut 110 befindlichen Adhäsivs 118 überführt, wie es schematisch in Fig. 4 dargestellt ist. Zur Athermisierung des opto-elektronischen Systems 100 muss eine vorgegebene Längenänderung ΔL pro Temperaturänderung ΔT erzielt werden. Bei bekannten thermischen Ausdehnungskoeffizienten kann damit die Länge L dimensioniert werden. Da eine Volumenänderung ΔV des dauerelastischen Adhäsivs bzw. dauerelastischen Polymers 118, wie bei allen Festkörpern, etwa dreimal größer ist als eine lineare Längenänderung, ergibt sich eine größere Änderung ΔL der Länge L gegenüber einer ungeführten, freien thermischen Längenausdehnung. D.h. im theoretischen Idealfall, unter Annahme keiner thermischen Ausdehnung des Nutmaterials, kann eine dreimal so große Längenänderung erzielt werden, verglichen mit ungeführter, freier Dehnung, da die Volumendehnung vollständig in Längendehnung umgesetzt wird. Das dauerelastische Adhäsiv 118 erfüllt damit zwei Aufgaben: Verbindung der Fügepartner 106, 108 (Oberteil mit Feder 112 / Unterteil mit Nut 110) sowie Anpassung der Längenänderung ΔL an einen geforderten Wert in µm/Kelvin. Der Effekt der Wegübersetzung ist umso größer, je größer der Unterschied zwischen den thermischem Ausdehnungskoeffizienten von dauerelastischem Adhäsiv 118 und dem Nutmaterial des Abstandshalters 108 ist.

Fig. 4 zeigt verschiedene Formen von Nut-/Federkonfigurationen. Besonders interessant ist dabei die rechts dargestellte Konfiguration, in der die Nut 110 über unterschiedlich hohe Seitenbegrenzungen 120, 122 verfügt. Das bewirkt eine Kontrolle der Fließrichtung des noch flüssigen Adhäsivs 118 für den Fall, dass zu viel Adhäsiv 118 in die Fuge bzw. Nut 110 eingebracht wurde. Die Berandung der Nut 110 ist also vorteilhafterweise so ausgeprägt, dass überlaufendes Adhäsiv bzw. Klebstoff 118 infolge unterschiedlicher Grabentiefen bzw. Seitenbegrenzungen 120, 122 nicht in den optischen Bereich 116 fließen kann (siehe Fig. 2b). Die dem optischen Bereich 116 zugewandte Seitenwand 120 der Nut 110 ist also vorzugsweise höher als die dem optisch genutzten Bereich 116 abgewandte Seitenwand 122 der Nut 110.

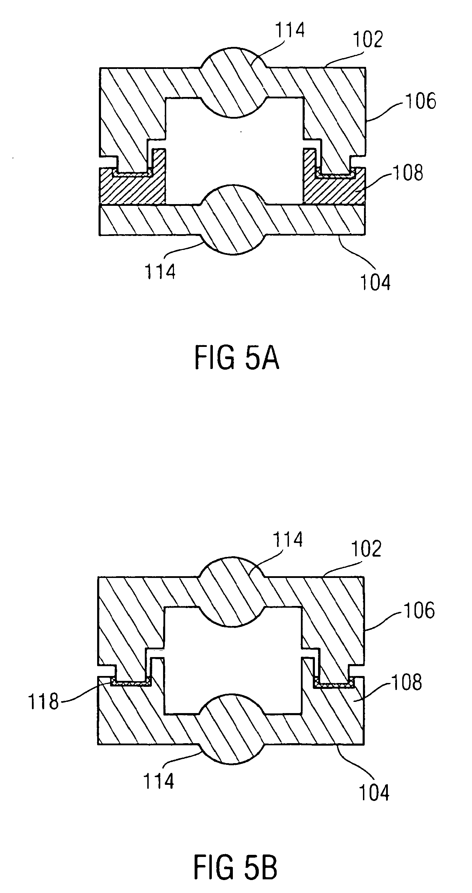

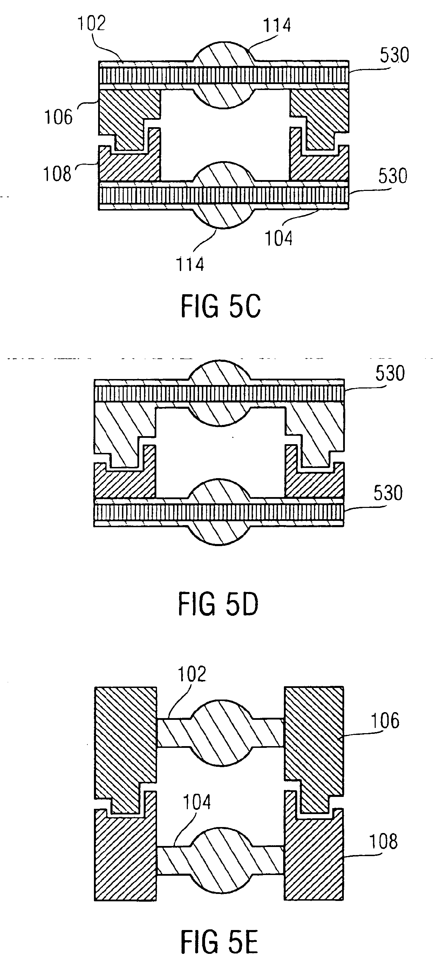

Nut 110 und/oder Feder 112 können gemäß Ausführungsbeispielen bereits in die Schichten 102, 104 mit optisch wirksamen Elementen 114 integriert sein, so dass nur ein (siehe Fig. 5a) bzw. kein zusätzliches Bauteil erforderlich ist (siehe Fig. 5b). D. h., gemäß Ausführungsbeispielen sind das erste Abstandshalterteil 106 und die erste Schicht 102 einstückig ausgebildet und/oder das zweite Abstandshalterteil 108 und die zweite Schicht 104 sind einstückig ausgebildet. Die optisch wirksamen Schichten 102, 104 können gemäß Ausführungsbeispielen auch auf einem Substrat 530, insbesondere einem Glassubstrat, angeordnet sein, wobei die Abstandshalterteile 106, 108 separat von den Schichten 102, 104 gebildet sind (siehe Fig. 5c). Des Weiteren können die optisch wirksamen Flächen bzw. Schichten 102 und/oder 104 auf einem Substrat 530 angeordnet sein, und dabei die Abstandshalterteile 106 und/oder 108 beinhalten, also einstückig mit ihnen gefertigt sein (siehe Fig. 5d). Gemäß einem weiteren Ausführungsbeispiel können die Schichten 102 und/oder 104 auch zwischen Abstandshaherteilen 106, 108 angeordnet sein, so wie es in Fig. 5e schematisch dargestellt ist. Die vorliegende Erfindung ist dabei nicht lediglich auf die in Fig. 5a-e exemplarisch gezeigten Ausführungsbeispiele begrenzt. Vielmehr sind auch Ausführungsbeispiele umfasst, die beliebige Kombinationen der Anordnungen gemäß den Fig. 5a-e aufweisen. D.h., beispielsweise könnte der obere einstückige Teil aus Fig. 5a auch mit dem unteren Teil gemäß Fig. 5e kombiniert werden, usw.

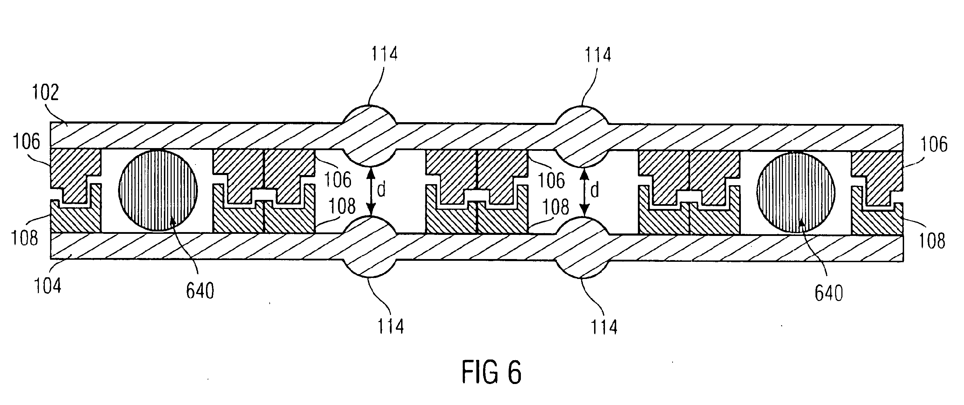

Eine laterale Positionierung der Fügepartner 106, 108 kann aktiv, z. B. anhand einer Auswertung optischer Parameter bzw. unter Nutzung mechanischer Ausrichtestrukturen, erfolgen, die an beliebigen Stellen auf einem Wafer 102, 104 angebracht sein können. Eine axiale Positionierung, d. h., die Positionierung in Stapelrichtung, die einen Abstand d der optisch wirksamen Komponenten 114, einstellt, kann aktiv z. B. anhand einer Auswertung optischer Parameter bzw. unter Einbringung hochpräziser Körper 640 erfolgen, die den Abstand d mechanisch vorgeben. Dies ist schematisch in Fig. 6 skizziert. Hieraus ergibt sich insgesamt eine Entkopplung von Herstellungstoleranzen der Abstandshalter 106, 108 von den geforderten Toleranzen für die axialen Abstände d der optisch wirksamen Komponenten 114. Werden zusätzliche Komponenten zur Erzielung eines optisch genutzten Bereichs 116 zwischen den optisch wirksamen Flächen bzw. Schichten 102, 104 genutzt, können diese aus einem anderen Material hergestellt werden und mithin andere optische und mechanische Eigenschaften aufweisen, wie beispielsweise Transparenz und thermische Ausdehnung.

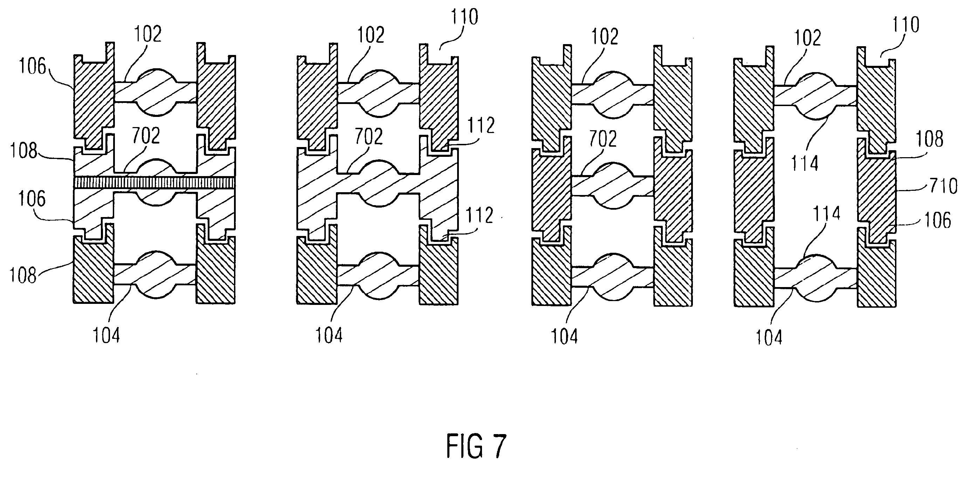

In Fig. 7 ist dargestellt, dass mehrere optische Flächen bzw. Schichten 102, 104, 702 übereinander angeordnet sein können, wobei Abstandshaherstrukturen 106, 108 mit Nut 110 und Feder 112 zu beiden Seiten zugeordneter optisch wirksamer Schichten 102, 104, 702 angeordnet sein können. Die optischen Flächen bzw. Schichten 102, 104, 702 können dabei auf Substraten 530 angeordnet sein, Nut- und/oder Federstrukturen 110, 112 enthalten oder sich zwischen zusätzlichen Abstandshalterbauteilen 710 befinden, die beidseitig Nut- und/oder Federelemente 110, 112 aufweisen können. Weiterhin können zusätzliche Abstandshalterbauteile 710 auch ohne optisch wirksame Flächen eingebracht werden, die wiederum Nut- und/oder Federstrukturen 110, 112 aufweisen. Die Abstandshalterbauteile 710, die beidseitig Nut- und/oder Federelemente 110, 112 aufweisen, können wiederum unterteilt gedacht werden in ein erstes und ein zweites Abstandshalterteil 106, 108, wobei dem ersten Abstandshalterteil 106 eine Feder 112 und dem zweiten Abstandshalterteil 108 eine Nut 110 zugeordnet ist, oder umgekehrt.

Die als Spacer genutzten zusätzlichen Abstandshalterteile 106, 108 bzw. 710 können vorteilhafterweise aus Polymeren bestehen und in einem preiswerten Verfahren wie Gießen, Spritzgießen, Heißprägen, Spritzprägen oder Resin Transfer Molding (Spritzpressen) gefertigt werden. Als Polymer für die Abstandshalter 106, 108 bzw. 710 können Epoxide genutzt werden, die hohen Temperaturen wiederstehen und deren optische Transmission (durchlässig bis undurchlässig) beeinflusst werden kann. Als Adhäsiv bzw. Klebstoff 118 zur Verbindung der Komponenten kann u.a. dasselbe Epoxid genutzt werden, was nach Härtung desselben zu einem quasi-monolithischen Aufbau eines die optischen Komponenten 102, 104, 114, 702 umgebenden Gehäuses führt, was zu Vorteilen hinsichtlich der thermischen Stabilität und Zuverlässigkeit des Gesamtaufbaus führt. Die Geometrie der Abstandshalterteile 106, 108 bzw. 710 kann so gewählt werden, dass diese als Blenden zur Definition der Apertur, des Feldes, der Vignettierung (d.h. eine Abschattung zu einem Bildrand hin, die durch eine axiale Anordnung zweier Öffnungen hervorgerufen wird) sowie zur Beeinflussung eines Falschlichts genutzt werden können.

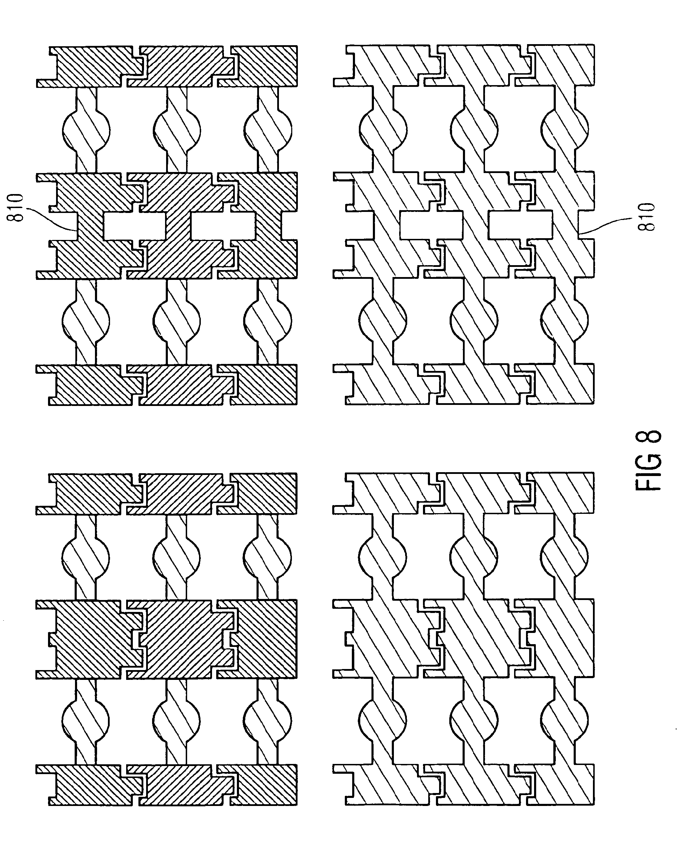

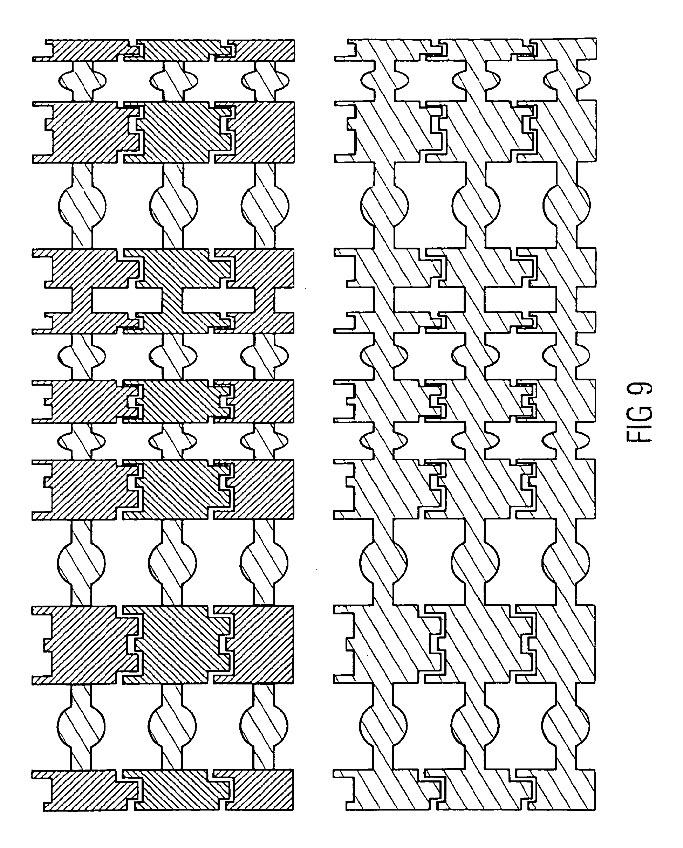

Wie in Fig. 8 schematisch dargestellt ist, können im Nutzen, d. h. auf Wafer-Level gefertige Systeme mit benachbarten optischen Systemen direkt anschließend (Fig. 8, links) bzw. über abgedünnte Bereiche 810 (Fig. 8, rechts) miteinander verbunden sein. Letztere vereinfachen einen Trennungsprozess bei einer Herauslösung der Einzelsysteme aus einem Nutzenverband. Stege 810 zwischen den einzelnen Bereichen mit optisch wirksamen Flächen sind dabei so auszulegen, dass sie die geforderte mechanische Stabilität für eine Handhabung und Montage gewährleisten. Nut- und Federstrukturen können in der Komponente, die die optischen Funktionsflächen enthält, integriert sein bzw. in zusätzlichen Bauelementen untergebracht sein, wie es im Vorhergehenden bereits eingehend beschrieben wurde. Auf Wafer-Level gefertige, benachbarte optische Schichtstapel können unterschiedliche optische Funktionsflächen und mechanische Strukturen aufweisen, wie es schematisch in Fig. 9 gezeigt ist. Mehrere nebeneinander angeordnete optische Funktionsflächen können zu einer größeren Einheit zugehörig sein. Diese zusammengesetzten Einheiten können wiederum direkt aneinander anschließen oder über abgedünnte Bereiche verbunden sein.

Durch Ausführungsbeispiele der vorliegenden Erfindung, d. h. durch eine Ausführung einer Bauteilpaarung von Abstandshaltern 106, 108 in einer Nut- und Federstruktur sowie durch Anpassung der axialen Überlappungslänge von Nut 110 und Feder 112 können Herstellungstoleranzen mechanischer Strukturen (Abstandshalter 106, 108), von denen optischer Strukturen (Schichten 102, 104) entkoppelt werden. Hierdurch kann ein zweiseitiger Kostenvorteil erreicht werden. Zum einen sinken Kosten bei der Herstellung zusätzlich benötigter Abstandshalterlagen bzw. Spacer-Wafer. Zum anderen erhöht sich eine Ausbeute der im Nutzen, der auf Wafer-Level, gefertigten Systeme. Die Spacer-Strukturen können weiterhin in einem preiswerten und lichtundurchlässigen Polymer gefertigt werden und eliminieren somit ansonsten erforderliche zusätzliche Komponenten und Herstellungsschritte zur Vermeidung von Falschlicht.

Des Weiteren kann mit Ausführungsbeispielen der vorliegenden Erfindung in einfacher und preiswerter Weise eine Kompensation einer thermisch induzierten Änderung der Brechkraft optischer Aufbauten, wie z. B. bei Kameraobjektiven, ermöglicht werden. Das erfindungsgemäße Konzept ist für die Fertigung im Nutzen, also auf Wafer-Level, geeignet und kann somit eine manuelle Einzelmontage umgehen, mit den damit verbundenen Kostenvorteilen. Die Kompensation des thermischen Einflusses geschieht passiv ohne Nutzung von zusätzlichen Energiequellen oder aktorischer Elemente.

Obwohl manche Aspekte der vorliegenden Erfindung im Zusammenhang mit einer Vorrichtung, d. h., mit einem optischen Schichtstapel beschrieben wurden, versteht es sich, dass diese Aspekte auch eine Beschreibung eines entsprechenden Herstellungsverfahrens darstellen, also ein Block oder ein Bauelement des optischen Schichtstapels auch als ein entsprechender Verfahrensschritt oder als ein Merkmal eines Verfahrensschritts zu verstehen ist. D. h., Ausführungsbeispiele der vorliegenden Erfindung umfassen auch ein Verfahren zum Herstellen eines optischen Schichtstapels 100 durch Anordnen einer ersten Schicht 102 oberhalb einer zweiten Schicht 104 unter Verwendung eines der ersten Schicht zugeordneten ersten Abstandshalterteils 106 und eines der zweiten Schicht zugeordneten zweiten Abstandshalterteils 108, wobei die zwei Abstandshalterteile 106, 108 Nut 110 und Feder 112 für ein Ineinandergreifen in einer Stapelrichtung des optischen Schichtstapels aufweisen, um eine Verbindung zwischen dem ersten und dem zweiten Abstandshalterteil 106, 108 und eine Beabstandung der ersten und zweiten Schicht 102, 104 in Stapelrichtung herzustellen.

Analog dazu stellen Aspekte, die im Zusammenhang mit einem oder als ein Verfahrensschritt beschrieben wurden, auch eine Beschreibung eines entsprechenden Blocks oder Details oder Merkmals eines erfindungsgemäßen optischen Schichtstapels dar.

Obige Ausführungsbeispiel zeigen somit auch einen optischer Schichtstapel, mit einer ersten Schicht 102, einer zweiten Schicht 104; einem der ersten Schicht zugeordneten ersten Abstandshalterteil 106 und einem der zweiten Schicht zugeordneten zweiten Abstandshalterteil 108, wobei die zwei Abstandshalterteile 106, 108 Nut und Feder 110, 112 bzw. - Graben oder Vertiefung und zugehörigen Vorsprung - für ein Ineinandergreifen in einer Stapelrichtung des optischen Schichtstapels aufweisen und für eine Verschiebbarkeit des ersten Abstandshalterteils 106 gegenüber dem zweiten Abstandshalterteil 108 in lateraler Richtung und in der Stapelrichtung die Feder eine geringere Breite als die Nut besitzt, wobei das erste und das zweite Abstandshalterteil 106, 108 mittels eines Adhäsivs zwischen Nut 110 und Feder 112 miteinander verbunden sind, um eine Verbindung zwischen dem ersten und dem zweiten Abstandshalterteil 106, 108 und eine Beabstandung der ersten und zweiten Schicht 102, 104 in Stapelrichtung herzustellen. Die Beabstandung der ersten und zweiten Schicht (102; 104) in Stapelrichtung durch das Adhäsiv ist vorzugsweise so eingestellt, dass die Wände der Nut von dem Abstandshalterteil 106, das die Feder aufweist, noch beabstandet sind, wie es in Fig. 4 gezeigt ist. Der so entstehende Abstand kann als "Rangierabstand" zur Entkopplung von Herstellungstoleranzen der Abstandshalter 106, 108 von geforderten Toleranzen für die Beabstandung der ersten und zweiten Schicht (102; 104) bzw. zur Justage der Schichten zueinander in axialer Richtung verwendet werden. Die Beabstandung der ersten und zweiten Schicht (102; 104) in Stapelrichtung durch das Adhäsiv so dabei vorzugsweise auch so, dass die Feder von einem Boden der Nut um eine Länge L ungleich Null beabstandet ist, und sich von dem Boden weg über die Länge L hinaus das Adhäsiv in der Nut befindet. In anderen Worten ausgedrückt ist eben die Feder nicht bis zu einem Anschlag in axialer Richtung in die Nut eingeführt, um in dieser axialen Position durch das Adhäsiv fixiert zu werden, sondern es wird in einer nicht vollständig eingeführten Position in Stapelrichtung gehalten, damit in beide Richtungen entlang der Schichtstapelachse Justagerangiermöglichkeit zum Auslgleich oben erwähnter Herstellungstolleranzen besteht. Soeben gemacht Ausführungen gelten auch für die Positionierung und Justage in lateraler Richtung. Auch hier wird die Feder nicht in einer Anschlagsposition in der Nut durch das Adhäsiv fixiert. Vielmehr wird eine in den beiden lateralen Dimensionen von den Wänden der Nut beabstandete Position der Feder durch das Adhäsiv fixiert, um entsprechende Herstellungstoleranzen ausgleichen zu können. Ferner beschreiben obige Ausführungsbeispiele somit auch ein Verfahren zum Herstellen eines optischen Schichtstapels mit folgenden Schritten: Anordnen einer ersten Schicht 102 oberhalb einer zweiten Schicht 104 unter Verwendung eines der ersten Schicht zugeordneten ersten Abstandshalterteils 106 und eines der zweiten Schicht zugeordneten zweiten Abstandshalterteils 108, wobei die zwei Abstandshalterteile 106; 108 Nut 110 und Feder 112 für ein Ineinandergreifen in einer Stapelrichtung des optischen Schichtstapels aufweisen und für eine Verschiebbarkeit des ersten Abstandshalterteils 106 gegenüber dem zweiten Abstandshalterteil 108 in lateraler Richtung und in der Stapelrichtung die Feder eine geringere Breite als die Nut besitzt, und wobei eine einem optisch genutzten Bereich 116 zugewandte Wand der Nut höher ist als eine den optisch genutzten Bereich abgewandte Wand der Nut; und Verbinden des ersten und zweiten Abstandshalterteils 106; 108 adhäsiv miteinander mittels eines Adhäsivs zwischen Nut 110 und Feder 112, um eine Verbindung zwischen dem ersten und dem zweiten Abstandshalterteil 106; 108 und eine Beabstandung der ersten und zweiten Schicht 102; 104 in Stapelrichtung herzustellen. Das Anordnen kann umfassen: Geben des Adhäsivs in die Nut; Setzen der Feder in die Nut in einem noch flüssigen Zustand des Adhäsivs; Positionierung des ersten und zweiten Abstandshalterteils zueinander in Stapelrichtung anhand einer Auswertung optischer Parameter oder durch Einbringung hochpräziser Körper (640) zwischen die erste und zweite Schicht; und Härten des Adhäsivs. Das Anordnen kann dabei das Positionierung des ersten und zweiten Abstandshalterteils zueinander in lateraler Richtung anhand einer Auswertung optischer Parameter oder unter Nutzung mechanischer Ausrichtestrukturen aufweisen.

Ein Beispiel schafft einen optischen Schichtstapel mit einer ersten Schicht; einer zweiten Schicht; einem der ersten Schicht zugeordneten ersten Abstandshalterteil; und einem der zweiten Schicht zugeordneten zweiten Abstandshalterteil, wobei die zwei Abstandshalterteile Nut und Feder für ein Ineinandergreifen in einer Stapelrichtung des optischen Schichtstapels aufweisen und für eine Verschiebbarkeit des ersten Abstandshalterteils gegenüber dem zweiten Abstandshalterteil in lateraler Richtung und in der Stapelrichtung die Feder eine geringere Breite als die Nut besitzt, wobei das erste und das zweite Abstandshalterteil mittels eines Adhäsivs zwischen Nut und Feder miteinander verbunden sind, um eine Verbindung zwischen dem ersten und dem zweiten Abstandshalterteil und eine Beabstandung der ersten und zweiten Schicht in Stapelrichtung herzustellen.

Bei einem bevorzugten Beispiel des optischen Schichtstapels stammt die optische Komponente der ersten und/oder zweiten Schicht aus der Gruppe von Linsen, Prismen, diffraktiven Strukturen, holografischen Strukturen oder optischen Filtern.

Bei einem bevorzugten Beispiel des optischen Schichtstapels ist das Adhäsiv ein dauerelastisches Material mit einem größeren thermischen Ausdehnungskoeffizienten als ein Material des ersten und/oder zweiten Abstandshalters.

Bei einem bevorzugten Beispiel des optischen Schichtstapels ist eine Tiefe der Nut, in der das dauerelastisches Material eingebracht ist, derart angepasst, dass sich bei Temperaturänderung eine Änderung des Abstands der ersten Schicht und der zweiten Schicht einstellt, die größer ist als eine sich ergebende Änderung allein infolge isotroper thermischer Ausdehnung des Nut-, Feder- und Adhäsivmaterials.

Bei einem bevorzugten Beispiel des optischen Schichtstapels ist das Adhäsiv ein Polymer, das auch als ein Material des ersten und/oder zweiten Abstandshalters verwendet wird.

## Patentansprüche

1. Optischer Schichtstapel (100), mit
einer ersten Schicht (102);
einer zweiten Schicht (104);
einem der ersten Schicht zugeordneten ersten Abstandshalterteil (106); und
einem der zweiten Schicht zugeordneten zweiten Abstandshalterteil (108),
wobei die zwei Abstandshalterteile (106; 108) Nut und Feder (110; 112) für ein Ineinandergreifen in einer Stapelrichtung des optischen Schichtstapels aufweisen und für eine Verschiebbarkeit des ersten Abstandshalterteils (106) gegenüber dem zweiten Abstandshalterteil (108) in lateraler Richtung und in der Stapelrichtung die Feder eine geringere Breite als die Nut besitzt, wobei das erste und das zweite Abstandshalterteil (106; 108) mittels eines Adhäsivs zwischen Nut (110) und Feder (112) miteinander verbunden sind, um eine Verbindung zwischen dem ersten und dem zweiten Abstandshalterteil (106; 108) und eine Beabstandung der ersten und zweiten Schicht (102; 104) in Stapelrichtung herzustellen,
**dadurch gekennzeichnet, dass**
eine einem optisch genutzten Bereich (116) zugewandte Wand der Nut höher ist als eine dem optisch genutzten Bereich (116) abgewandte Wand der Nut.

2. Optischer Schichtstapel gemäß Anspruch 1, wobei die erste und/oder zweite Schicht (102; 104) eine optische Komponente (114) aufweist.

3. Optischer Schichtstapel gemäß einem der vorhergehenden Ansprüche, wobei das erste Abstandshalterteil (106) mit der ersten Schicht (102) stoffschlüssig verbunden ist und wobei das zweite Abstandshalterteil (108) mit der zweiten Schicht (104) stoffschlüssig verbunden ist.

4. Optischer Schichtstapel gemäß einem der vorhergehenden Ansprüche, wobei durch einen Bereich zwischen der ersten Schicht (102) und der zweiten Schicht (104) der optisch genutzte Bereich (116) definiert wird, und wobei Nut (110) und Feder (112) der zwei Abstandshalterteile (106; 108) derart ausgebildet sind, dass sie den optisch genutzten Bereich (116) in einer geschlossenen Kontur umlaufen.

5. Optischer Schichtstapel gemäß einem der Ansprüche 1 bis 4, wobei das Adhäsiv ein dauerelastische Material mit einem größeren thermischen Ausdehnungskoeffizienten als ein Material des ersten und/oder zweiten Abstandshalters ist.

6. Optischer Schichtstapel gemäß einem der Ansprüche 1 bis 5, wobei die erste Schicht eine abbildende Optik trägt oder bildet und ein thermischer Ausdehnungskoeffizient des Adhäsivs (118) und eine Form der Nut (110) und der Feder (112) so ausgewählt sind, dass über einen Temperaturbereich von -40° bis 80°C hinweg ein Abstand einer Bildebene der abbildenden Optik in Richtung einer optischen Achse der abbildenden Optik zur zweiten Schicht um weniger als ±1% einer Objektivbrennweite der abbildenden Optik bei 20°C von einer Lage der Bildebene bei 20°C abweicht.

7. Optischer Schichtstapel gemäß einem der Ansprüche 1 bis 6, wobei die erste Schicht eine erste abbildende Optik und die zweite Schicht eine zweite abbildende Optik trägt oder bildet, und ein thermischer Ausdehnungskoeffizient des Adhäsivs (118) und eine Form der Nut (110) und der Feder (112) so ausgewählt sind, dass über einen Temperaturbereich von -40° bis 80°C hinweg ein Abstand einer Bildebene der ersten abbildenden Optik in Richtung einer gemeinsamen optischen Achse der ersten und zweiten abbildenden Optik zu einer Objektebene der zweiten abbildenden Optik um weniger als ±1% der größeren der Objektivbrennweiten der ersten und zweiten abbildenden Optik bei 20°C von Null abweicht.

8. Optischer Schichtstapel gemäß einem der vorhergehenden Ansprüche, wobei das erste Abstandshalterteil (106) und die erste Schicht (102) einstückig ausgebildet sind und/oder das zweite Abstandshalterteil (108) und die zweite Schicht (104) einstückig ausgebildet sind.

9. Optischer Schichtstapel gemäß einem der vorhergehenden Ansprüche, wobei durch einen Bereich (116) zwischen der ersten Schicht (102) mit der optischen Komponente (114) und der zweiten Schicht (104) der optisch genutzte Bereich definiert wird, und wobei eine Geometrie der Abstandshalterteile (106; 108) angepasst ist, so dass diese als Blenden zur Definition einer Apertur, einer Vignettierung und/oder zur Beeinflussung von Falschlicht dienen.

10. Optischer Schichtstapel gemäß einem der vorhergehenden Ansprüche, wobei die Beabstandung der ersten und zweiten Schicht (102; 104) in Stapelrichtung durch das Adhäsiv so ist, dass die Wände der Nut von dem Abstandshalterteil (106), das die Feder aufweist, noch beabstandet sind.

11. Optischer Schichtstapel gemäß Anspruch 8, wobei die Beabstandung der ersten und zweiten Schicht (102; 104) in Stapelrichtung durch das Adhäsiv so ist, dass die Feder von einem Boden der Nut um eine Länge L beabstandet ist, und sich von dem Boden weg über die Länge L hinaus das Adhäsiv in der Nut befindet.

12. Verfahren zum Herstellen eines optischen Schichtstapels (100), mit folgenden Schritten:
Anordnen einer ersten Schicht (102) oberhalb einer zweiten Schicht (104) unter Verwendung eines der ersten Schicht zugeordneten ersten Abstandshalterteils (106) und eines der zweiten Schicht zugeordneten zweiten Abstandshalterteils (108), wobei die zwei Abstandshalterteile (106; 108) Nut (110) und Feder (112) für ein Ineinandergreifen in einer Stapelrichtung des optischen Schichtstapels aufweisen und für eine Verschiebbarkeit des ersten Abstandshalterteils (106) gegenüber dem zweiten Abstandshalterteil (108) in lateraler Richtung und in der Stapelrichtung die Feder eine geringere Breite als die Nut besitzt und wobei eine einem optisch genutzten Bereich (116) zugewandte Wand der Nut höher ist als eine dem optisch genutzten Bereich abgewandte Wand der Nut; und
Verbinden des ersten und zweiten Abstandshalterteils (106; 108) adhäsiv miteinander mittels eines Adhäsivs zwischen Nut (110) und Feder (112), um eine Verbindung zwischen dem ersten und dem zweiten Abstandshalterteil (106; 108) und eine Beabstandung der ersten und zweiten Schicht (102; 104) in Stapelrichtung herzustellen.

13. Verfahren gemäß Anspruch 12, bei dem das Anordnen folgende Schritte aufweist:
Geben des Adhäsivs in die Nut;
Setzen der Feder in die Nut in einem noch flüssigen Zustand des Adhäsivs;
Positionierung des ersten und zweiten Abstandshalterteils zueinander in Stapelrichtung anhand einer Auswertung optischer Parameter oder durch Einbringung hochpräziser Körper (640) zwischen die erste und zweite Schicht; und
Härten des Adhäsivs.

14. Verfahren gemäß Anspruch 13, bei dem das Anordnen ferner folgenden Schritt aufweist:
Positionierung des ersten und zweiten Abstandshalterteils zueinander in lateraler Richtung anhand einer Auswertung optischer Parameter oder unter Nutzung mechanischer Ausrichtestrukturen.

## Claims

1. An optical layer stack (100), comprising:
a first layer (102);
a second layer (104);
a first spacer part (106) associated with the first layer; and
a second spacer part (108) associated with the second layer,
wherein the two spacer parts (106; 108) comprise groove and tongue (110; 112) for an engagement in a stacking direction of the optical layer stack and for a shiftability of the first spacer part (106) with respect to the second spacer part (108) in the lateral direction and in the stacking direction the tongue has a smaller width than the groove, wherein the first and the second spacer part (106; 108) are connected to each other by means of an adhesive between groove (110) and tongue (112) in order to provide a connection between the first and the second spacer part (106; 108) and a spacing of the first and second layer (102; 104) in stacking direction,
**characterized in that**
a wall of the groove facing the optically used area (116) is higher than a wall of a groove facing away from the optically used area.

2. The optical layers stack according to claim 1, wherein the first and/or second layer (102; 104) comprises an optical component (114).

3. The optical layer stack according to one of the preceding claims, wherein the first spacer part (106) is firmly bonded to the first layer (102) and wherein the second spacer part (108) is firmly bonded to the second layer (104).

4. The optical layer stack according to one of the preceding claims, wherein by an area between the first layer (102) and the second layer (104) the optically used area (116) is defined, and wherein groove (110) and tongue (112) of the two spacer parts (106; 108) are implemented such that they circle the optically used area (116) in a closed contour.

5. The optical layer stack according to one of claims 1 to 4, wherein the adhesive is a permanently elastic material with a greater coefficient of thermal expansion than a material of a first and/or second spacer.

6. The optical layer stack according to one of claims 1 to 5, wherein the first layer carries or forms an imaging optics and a coefficient of thermal expansion of the adhesive (118) and a shape of a groove (110) and the tongue (112) are selected so that across a temperature range from -40° to 80°C a distance of an image plane of the imaging optics in the direction of an optical axis of the imaging optics to the second layer deviates by less than ± 1% of an objective focal length of the imaging optics at 20°C from a position of the image plane at 20°C.

7. The optical layer stack according to one of claims 1 to 6, wherein the first layer carries or forms a first imaging optics and the second layer a second imaging optics and a coefficient of thermal expansion of the adhesive (118) and a shape of the groove (110) and the tongue (112) are selected so that across a temperature range from -40° to 80°C a distance of an image plane of the first imaging optics in the direction of a common optical axis of the first and second imaging optics towards an object plane of the second imaging optics deviates from zero by less than ± 1% of the greater one of the objective focal lengths of the first and second imaging optics at 20°C.

8. The optical layer stack according to one of the preceding claims, wherein the first spacer part (106) and the first layer (102) are implemented integrally and/or the second spacer part (108) and the second layer (104) are implemented integrally.

9. The optical layer stack according to one of the preceding claims, wherein by an area (116) between the first layer (102) with the optical component (114) and the second layer (104) the optically used area is defined, and wherein a geometry of the spacer parts (106; 108) is adapted so that the same serve as diaphragms for defining an aperture, a vignetting and/or for influencing false light.

10. The optical layer stack according to one of the preceding claims, wherein the spacing of the first and second layer (102; 104) in stacking direction by the adhesive is so that the walls of the groove are still spaced apart from the spacer part (106) comprising the tongue.

11. The optical layer stack according to claim 8, wherein the spacing of the first and the second layer (102; 104) in stacking direction by the adhesive is so that the tongue is spaced apart from a bottom of the groove by a length L and from the bottom beyond the length L the adhesive is contained in the groove.

12. A method for manufacturing an optical layer stack (100), comprising:
arranging a first layer (102) above a second layer (104) using a first spacer part (106) associated with the first layer and a second spacer part (108) associated with the second layer, wherein the two spacer parts (106; 108) comprise groove (110) and tongue (112) for an engagement in a stacking direction of the optical layer stack and for a shiftabiltiy of the first spacer part (106) with respect to the second spacer part (108) in the lateral direction and in the stacking direction the tongue has a smaller width than the groove, and wherein a wall of the groove facing the optically used area (116) is higher than a wall of a groove facing away from the optically used area; and
connecting the first and the second spacer part (106; 108) to each other adhesively by means of an adhesive between groove (110) and tongue (112) in order to provide a connection between the first and the second spacer part (106; 108) and a spacing of the first and second layer (102; 104) in stacking direction.

13. The method according to claim 12, wherein arranging further comprises:
inserting the adhesive into the groove;
putting the tongue into the groove, wherein the adhesive is still in a liquid state;
positioning the first and the second spacer parts with respect to each other in a stacking direction using an evaluation of optical parameters or by introducing highly precise bodies (640) between the first and the second layer; and
hardening the adhesive.

14. The method according to claim 13, wherein arranging further comprises:
positioning the first and the second spacer parts with respect to each other in the lateral direction using an evaluation of optical parameters or using mechanical alignment structures.

## Revendications

1. Empilement optique de couches (100), avec
une première couche (102);
une deuxième couche (104);
un premier élément d'entretoise (106) associé à la première couche; et
un deuxième élément d'entretoise (108) associé à la deuxième couche,
les deux éléments d'entretoise (106; 108) présentant une rainure et languette (110; 112) en vue d'un engagement l'un dans l'autre dans une direction d'empilement de l'empilement optique de couches et en vue d'une aptitude au déplacement du premier élément d'entretoise (106) par rapport au deuxième élément d'entretoise (108) dans la direction latérale et la languette possédant, dans la direction d'empilement, une largeur plus petite que la rainure, le premier et le deuxième élément d'entretoise (106; 108) étant assemblés l'un à l'autre au moyen d'un adhésif entre la rainure (110) et la languette (112), pour créer un assemblage entre le premier et le deuxième élément d'entretoise (106; 108) et un écartement entre la première et la deuxième couche (102; 104) dans la direction d'empilement,
**caractérisé par le fait**
**qu'**une paroi de la rainure faisant face à une zone utilisée optiquement (116) est plus haute qu'une paroi de la rainure opposée à la zone utilisée optiquement (116).

2. Empilement optique de couches selon la revendication 1, dans lequel la première et/ou la deuxième couche (102; 104) présente une composante optique (114).

3. Empilement optique de couches selon l'une des revendications précédentes, dans lequel le premier élément d'entretoise (106) est assemblé en liaison étanche aux poussières avec la première couche (102) et dans lequel le deuxième élément d'entretoise (108) est assemblé en liaison étanche aux poussières avec la deuxième couche (104).

4. Empilement optique de couches selon l'une des revendications précédentes, dans lequel la zone utilisée optiquement (116) est définie par une zone entre la première couche (102) et la deuxième couche (104), et dans lequel la rainure (110) et la languette (112) des deux éléments d'entretoise (106; 108) sont réalisées de sorte qu'elles entourent la zone utilisée optiquement (116) selon un contour fermé.

5. Empilement optique de couches selon l'une des revendications 1 à 4, dans lequel l'adhésif est un matériau élastique permanent à coefficient de dilation thermique supérieur à celui d'un matériau de la première et/ou de la deuxième entretoise.

6. Empilement optique de couches selon l'une des revendications 1 à 5, dans lequel la première couche porte ou constitue une optique de reproduction et un coefficient de dilation thermique de l'adhésif (118) et une forme de la rainure (110) et de la languette (112) sont choisis de sorte que, sur une plage de températures de -40° à 80°C, une distance entre un plan d'image de l'optique de reproduction en direction d'un axe optique de l'optique de reproduction et la deuxième couche varie de moins de ±1% d'une distance focale d'objectif de l'optique de reproduction à 20°C par rapport à une position du plan d'image à 20°C.

7. Empilement optique de couches selon l'une des revendications 1 à 6, dans lequel la première couche porte ou constitue une première optique de reproduction et la deuxième couche une deuxième optique de reproduction, et un coefficient de dilation thermique de l'adhésif (118) et une forme de la rainure (110) et de la languette (112) sont choisis de sorte que, sur une plage de températures de -40° à 80°C, une distance entre un plan d'image de la première optique de reproduction en direction d'un axe optique commun de la première et de la deuxième optique de reproduction et un plan d'objet de la deuxième optique de reproduction varie de moins de ±1% des distances focales d'objectif les plus grandes de la première et de la deuxième optique de reproduction à 20°C par rapport à zéro.

8. Empilement optique de couches selon l'une des revendications précédentes, dans lequel le premier élément d'entretoise (106) et la première couche (102) sont réalisés d'une seule pièce et/ou le deuxième élément d'entretoise (108) et la deuxième couche (104) sont réalisés d'une seule pièce.

9. Empilement optique de couches selon l'une des revendications précédentes, dans lequel la zone utilisée optiquement est définie par une zone (116) entre la première couche (102) avec la composante optique (114) et la deuxième couche (104), et dans lequel une géométrie des éléments d'entretoise (106; 108) sont adaptés de sorte qu'ils servent de diaphragmes pour la définition d'une ouverture, d'une vignettisation et/ou pour exercer une influence sur les éclats parasites.

10. Empilement optique de couches selon l'une des revendications précédentes, dans lequel l'écartement entre la première et la deuxième couche (102; 104) dans la direction d'empilement par l'adhésif est tel que les parois de la rainure soient encore écartées de l'élément d'entretoise (106) qui présente la languette.

11. Empilement optique de couches selon la revendication 8, dans lequel l'écartement entre la première et la deuxième couche (102; 104) dans la direction d'empilement par l'adhésif est tel que la languette soit écartée d'un fond de la rainure d'une longueur L, et que l'adhésif se trouve dans la rainure à partir du fond sur plus de la longueur L.

12. Procédé de préparation d'un empilement optique de couches (100), aux étapes suivantes consistant à:
disposer une première couche (102) au-dessus d'une deuxième couche (104) à l'aide d'un premier élément d'entretoise (106) associé à la première couche et d'un deuxième élément d'entretoise (108) associé à la deuxième couche, les deux éléments d'entretoise (106; 108) présentant une rainure (110) et languette (112) en vue de l'engagement l'un dans l'autre dans une direction d'empilement de l'empilement optique de couches et en vue d'une aptitude au déplacement du premier élément d'entretoise (106) par rapport au deuxième élément d'entretoise (108) dans la direction latérale et la languette possédant, dans la direction d'empilement, une largeur plus petite que la rainure, et dans lequel une paroi de la rainure faisant face à une zone utilisée optiquement (116) est plus haute qu'une paroi de la rainure opposée à la zone utilisée optiquement ; et
assembler le premier et le deuxième élément d'entretoise (106; 108) de manière adhésive l'un à l'autre au moyen d'un adhésif entre la rainure (110) et la languette (112), pour réaliser un assemblage entre le premier et le deuxième élément d'entretoise (106; 108) et un écartement entre la première et la deuxième couche (102; 104) dans la direction d'empilement.

13. Procédé selon la revendication 12, dans lequel la disposition présente les étapes suivantes consistant à:
appliquer l'adhésif dans la rainure;
placer la languette dans la rainure dans un état encore liquide de l'adhésif;
positionner le premier et le deuxième élément d'entretoise l'un par rapport à l'autre dans la direction d'empilement à l'aide d'une évaluation de paramètres optiques ou par introduction de corps hautement précis (640) entre la première et la deuxième couche;
et
laisser durcir l'adhésif.

14. Procédé selon la revendication 13, dans lequel la disposition présente l'étape suivante consistant à:
positionner le premier et le deuxième élément d'entretoise l'un par rapport à l'autre dans la direction latérale à l'aide d'une évaluation de paramètres optiques ou en utilisant des structures d'orientation mécaniques.
